Europäisches Patentamt

European Patent Office

Office européen des brevets

(19)

(11) **EP 0 845 727 B1**

(12) **FASCICULE DE BREVET EUROPEEN**

(45) Date de publication et mention
de la délivrance du brevet:
**03.07.2002 Bulletin 2002/27**

(51) Int Cl.[7]: **G05D 1/06**

(21) Numéro de dépôt: **97402724.5**

(22) Date de dépôt: **14.11.1997**

(54) **Procédé pour la protection d'un aéronef contre les rafales de vent vertical et dispositif de pilotage en profondeur mettant en oeuvre ce procédé**

Methode zum Schutz eines Flugzeuges vor Querwindstössen und Vorrichtung zum Steuern der Höhe eines Flugzeuges die die obengenannte Methode anwendet

Method for the protection of an aircraft against gusts of wind and device for altitude control using this method

(84) Etats contractants désignés:
**DE GB**

(30) Priorité: **02.12.1996 FR 9614737**

(43) Date de publication de la demande:
**03.06.1998 Bulletin 1998/23**

(73) Titulaire: **AEROSPATIALE MATRA**
**75016 Paris (FR)**

(72) Inventeurs:
• **Larramendy, Panxika**
**31000 Toulouse (FR)**

• **Delgado, Daniel**
**31830 Plaisance Du Touch (FR)**

(74) Mandataire: **Bonnetat, Christian**
**CABINET BONNETAT**
**29, rue de St. Pétersbourg**
**75008 Paris (FR)**

(56) Documents cités:
**EP-A- 0 322 282          US-A- 4 314 341**

EP 0 845 727 B1

## Description

La présente invention concerne un procédé pour la protection d'un aéronef en vol de croisière contre des facteurs de charge excessifs lors de l'apparition de rafales de vent vertical, ainsi qu'un dispositif pour le pilotage en profondeur d'un aéronef mettant en oeuvre ce procédé.

Les rafales de vent vertical concernées par la présente invention sont des turbulences tourbillonnaires (et non pas des turbulences à hautes fréquences sources de vibrations), engendrées par des rouleaux tourbillonnaires de type vortex, qui soumettent l'aéronef qui les traverse ou passe à leur périphérie, à une rafale de vent ascendant (ou descendant), puis à une rafale de vent descendant (ou ascendant) durant quelques secondes, ou bien à une succession de rafales de vent ascendant et descendant, dans le cas d'une pluralité de vortex.

On sait que les aéronefs commerciaux comportent un système de commande de vol en profondeur sous contrôle du pilote, un pilote automatique, des moyens de commutation permettant le pilotage des surfaces aérodynamiques de profondeur (gouvernes, trim) dudit aéronef, soit par ledit système de commande de vol piloté, soit par ledit pilote automatique et des moyens de protection, notamment en incidence, susceptibles d'agir sur lesdits moyens de commutation pour déconnecter ledit pilote automatique et mettre en service ledit système de commande de vol piloté, lorsque l'incidence atteint, en croissant, une valeur trop importante (voir par exemple le brevet US-A- 4 638 229.

Si l'aéronef, en vol de croisière avec le pilote automatique en service, rencontre une telle rafale de vent ascendant, il est soumis, dans un premier temps, à un facteur de charge positif important. Le pilote automatique réagit aux variations d'assiette longitudinale, mais son autorité est limitée, de sorte que sa réaction est faible et qu'il est déconnecté par l'action desdits moyens de protection et desdits moyens de commutation, dès que l'incidence atteint un seuil de protection. Le pilotage s'effectue alors par l'intermédiaire du système de commande de vol piloté qui engendre un ordre important à piquer pour réduire l'incidence et contrer l'effet du vent ascendant. Cependant, dans un deuxième temps, la rafale change de sens et le vent devient descendant, de sorte que maintenant l'action à piquer du pilote s'ajoute à la rafale de vent descendant pour appliquer à l'aéronef un facteur de charge négatif, encore plus élevé que celui qui résulterait de la rafale elle-même. Il peut donc en résulter des blessures pour les passagers et des détériorations pour l'aéronef.

Un processus semblable se déroule si l'aéronef était en pilotage manuel au moment de l'apparition de ladite rafale.

Bien entendu, ce qui a été décrit ci-dessus s'applique mutatis mutandis au cas de la rencontre d'une rafale de vent descendant, puis ascendant.

Ainsi, de ce qui précède, on comprendra aisément que, de façon générale, toute action de pilotage pour contrer une rafale de vent produit ses effets au moment de l'inversion de sens de ladite rafale, de sorte que cette action de pilotage accroît défavorablement le facteur de charge, déjà élevé, auquel ladite rafale soumet l'aéronef.

La présente invention a pour objet de remédier à cet inconvénient et d'améliorer le comportement et le pilotage de l'aéronef en présence de rafales de vent vertical.

A cette fin, selon l'invention, le dispositif pour le pilotage en profondeur d'un aéronef, comportant un système de manche à la disposition du pilote, un système de commande de vol en profondeur recevant les ordres de pilotage en profondeur venant dudit système de manche et engendrant des ordres de commande en profondeur pour les surfaces aérodynamiques de commande en profondeur, un pilote automatique, des moyens de commutation adressant auxdites surfaces aérodynamiques soit les ordres de commande en profondeur élaborés par ledit système de commande de vol, soit des ordres de commandé en profondeur élaborés par ledit pilote automatique, des moyens de protection susceptibles d'agir sur lesdits moyens de commutation pour déconnecter ledit pilote automatique et mettre en service ledit système de commande de vol piloté en réponse à un signal représentatif de la présence de rafales de vent vertical délivré par un dispositif pour la détection de rafales de vent vertical, et des moyens retardant, en vol de croisière avec pilote automatique en service, la commutation entre ledit pilote automatique et ledit système de commande de vol piloté d'un temps de retard, est remarquable en ce que lesdits moyens retardent la commutation entre le pilote automatique et le système de commande de vol piloté d'un temps de retard qui est au moins approximativement égal à la durée usuelle des rafales de vent vertical les plus fréquentes et ne procèdent à cette commutation que si la rafale persiste à l'expiration dudit temps de retard, et en ce que le dispositif pour la détection de rafales de vent vertical comprend :

- des moyens de soustraction recevant la dérivée première ($\dot{\alpha}$) par rapport au temps de l'incidence actuelle ($\alpha$) et la dérivée première ($\dot{\theta}$) par rapport au temps de l'attitude actuelle ($\theta$) de l'aéronef et délivrant à leur sortie la valeur absolue ($|\dot{\alpha}-\dot{\theta}|$) de la différence entre lesdites dérivées ;

- des premiers moyens de comparaison pour comparer ladite valeur absolue à un seuil supérieur et pour délivrer un signal si ladite valeur absolue est supérieure audit seuil supérieur ;

- des deuxièmes moyens de comparaison pour comparer le nombre de Mach actuel de l'aéronef à un seuil de nombre de Mach et pour délivrer un signal si ledit nombre de Mach actuel est supérieur audit seuil de nombre de Mach ; et

- des premiers moyens logiques de type ET recevant, respectivement, à leurs entrées :

  . ledit signal résultant de la comparaison dé ladite valeur absolue audit seuil supérieur ;
  . ledit signal résultant de la comparaison dudit nombre de Mach actuel audit seuil de nombre de Mach ; et
  . un signal représentatif du fait que les volets et les becs aérodynamiques dudit aéronef sont en configuration lisse,

  lesdits premiers moyens logiques délivrant à leur sortie un signal représentatif de la présence de rafales de vent vertical.

La présente invention est basée sur le fait que, puisqu'on ne peut jamais savoir quand une rafale de vent vertical va s'inverser, le mieux à faire, si on veut limiter les facteurs de charge appliqués à l'aéronef, est d'éviter de contrer la rafale et de maintenir le pilote automatique en service, car c'est lui qui a les réactions les plus faibles et qui présente donc le comportement le plus approprié en présence de rafales.

L'expérience a montré que les rafales de vent les plus fréquentes avaient une durée usuelle de l'ordre de 3 secondes. Ainsi, grâce à la présente invention, d'une part les facteurs de charge appliqués à l'aéronef sont réduits et, d'autre part, la commutation entre le pilote automatique et le système de commande de vol piloté n'a lieu que pour des rafales de vent vertical, dont la durée est supérieure aux rafales de vent les plus fréquentes, ce qui diminue considérablement le nombre de telles commutations.

De plus, selon la présente invention, on se propose de détecter la présence d'une rafale de vent vertical d'une part, pour éviter au pilote la tentation d'agir sur le manche et, d'autre part, pour améliorer le pilotage de l'aéronef, si une commutation pilote automatique - pilotage manuel a eu lieu.

Avantageusement, ledit dispositif de détection de rafale reçoit des mesures de l'incidence et de l'attitude, disponibles à bord de l'aéronef, et il comporte des moyens de dérivation pour calculer lesdites dérivées premières.

De préférence, ledit dispositif de détection comporte :

- des troisièmes moyens de comparaison pour comparer ladite valeur absolue à un seuil inférieur audit seuil supérieur et pour délivrer un signal si ladite valeur absolue est inférieure audit seuil inférieur ; et
- des seconds moyens logiques interposés entre lesdits premiers moyens de comparaison et lesdits premiers moyens logiques, lesdits seconds moyens logiques recevant à leurs entrées lesdits signaux résultant des comparaisons de ladite valeur absolue avec lesdits seuils et délivrant auxdits premiers moyens logiques :

  . soit aucun signal, si ledit signal résultant de la comparaison de ladite valeur absolue audit seuil inférieur existe ;
  . soit ledit signal résultant de la comparaison de ladite valeur absolue audit seuil supérieur, tant que ladite valeur absolue est supérieure audit seuil inférieur.

Grâce à un tel dispositif de détection, il est possible de perfectionner le dispositif de pilotage de la façon mentionnée ci-dessus.

Ainsi, selon un mode de réalisation du dispositif de pilotage conforme à la présente invention, celui-ci comporte de plus :

- un pilote automatique auxiliaire engendrant des ordres de pilotage en profondeur renforcés, au moins en ce qui concerne les ordres à monter ;
- un premier commutateur commandé disposé entre lesdits pilotes automatiques, d'une part, et lesdits moyens de commutation, d'autre part, et pouvant adresser à ceux-ci, soit les ordres de commande en profondeur provenant dudit pilote automatique, soit les ordres de commande en profondeur provenant dudit pilote automatique auxiliaire,

et ledit dispositif de détection de rafales de vent vertical contrôle ledit premier commutateur commandé pour que lesdits ordres de pilotage en profondeur renforcés soient adressés auxdites surfaces aérodynamiques, à la fin desdites rafales, si ledit pilote automatique n'a pas été déconnecté avec retard par lesdits moyens de commutation.

Ainsi, quand le pilote automatique principal est resté engagé pendant la rafale de vent vertical, pour récupérer plus rapidement les variations d'altitude conséquentes à ladite rafale (et ainsi éviter que le pilote ne soit tenté de repasser en pilotage manuel après la turbulence dans le souci de maintenir l'altitude), le pilote automatique auxiliaire est mis en service, à la place dudit pilote automatique principal, par l'action dudit premier commutateur commandé. Pendant quelques secondes (par exemple 20 secondes), le pilote automatique auxiliaire à autorité augmentée (par exemple double de celle du pilote automatique principal) agit pour que l'aéronef rejoigne rapidement (deux fois plus vite dans l'exemple précédent) l'altitude antérieure à la rafale.

Selon encore un autre aspect de la présente invention, le dispositif de pilotage comporte de plus :

- un système de commande de vol auxiliaire piloté recevant lesdits ordres de pilotage en profondeur venant dudit système de manche et engendrant des ordres-de pilotage en profondeur limités au moins en ce qui concerne les ordres à piquer ;

- un second commutateur commandé disposé entre lesdits systèmes de commande de vol piloté, d'une part, et lesdits moyens de commutation, d'autre part, et pouvant adresser à ceux-ci soit les ordres de commande en profondeur provenant dudit système de commande de vol, soit les ordres de commande en profondeur limités provenant dudit système de commande de vol auxiliaire, et

ledit dispositif de détection de rafales de vent vertical contrôle ledit second commutateur commandé pour que lesdits ordres de pilotage en profondeur limités soient adressés auxdites surfaces aérodynamiques pendant de telles rafales de vent vertical, après déconnexion dudit pilote automatique.

Ainsi, si le pilote automatique a été déconnecté soit par action desdits moyens de protection, soit par action du pilote sur le manche, les ordres volontaires de pilotage en profondeur venant du pilote sont limités, ce qui évite l'accroissement des facteurs de charge résultant de la rafale.

Les figures du dessin annexé feront bien comprendre comment l'invention peut être réalisée. Sur ces figures, des références identiques désignent des éléments semblables.

La figure 1 est un diagramme des vitesses d'un avion en vol.

La figure 2 est le schéma synoptique d'un mode de réalisation du dispositif pour la détection de rafales de vent vertical, conforme à la présente invention.

La figure 3 est le schéma synoptique d'un exemple de réalisation du dispositif pour le pilotage en profondeur d'un avion, conforme à la présente invention.

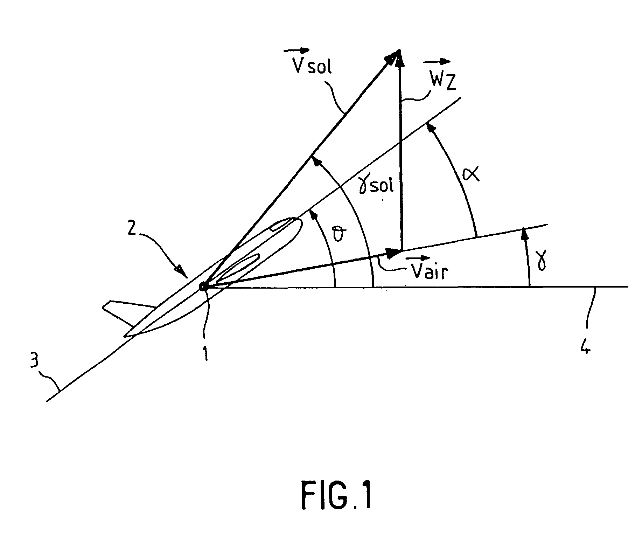

Sur la figure 1, on a représenté le diagramme des vitesses appliquées au centre de gravité 1 d'un avion 2, en vol de montée, rencontrant une rafale de vent vertical ascendant. Sur cette figure 1, l'axe longitudinal 3 de l'avion 2 est incliné de l'assiette $\theta$ par rapport à la ligne d'horizon 4 et présente l'incidence $\alpha$ par rapport à la vitesse aérodynamique $\vec{v_{air}}$ qui, elle-même, est inclinée de la pente aérodynamique $\gamma$ par rapport à ladite ligne d'horizon 4. La vitesse $\vec{w_z}$ du vent vertical ascendant se combine avec ladite vitesse $\vec{v_{air}}$ pour composer la vitesse $\vec{v_{sol}}$ dudit avion 2 par rapport au sol, cette vitesse $\vec{v_{sol}}$ étant inclinée de la pente $\gamma$sol par rapport à la ligne d'horizon 4.

On peut aisément constater que : $\gamma$ sol = $\gamma$ + (Wz)/Vair, en appelant Wz et Vair, respectivement les longueurs des vecteurs $\vec{w_z}$ et $\vec{v_{air}}$.

Par ailleurs, $\gamma = \theta-\alpha$ de sorte que

$$\gamma \text{ sol} = \theta-\alpha+(Wz)/Vair.$$

Etant donné, comme expliqué ci-dessus, que l'on cherche, selon l'invention, à améliorer le comportement de l'avion en vol de croisière, on peut s'affranchir de la mesure de $\gamma$ sol et considérer que celle-ci est nulle. Par suite,

$$(Wz)/Vair = \alpha-\theta$$

Si l'on considère des variations de vent instantanées $\delta/\delta t(Wz/Vair)$, on voit qu'avec l'hypothèse faite ci-dessus, ces variations sont égales à $\dot{\alpha}-\dot{\theta}$, qui représente la différence entre les dérivées premières par rapport au temps de l'incidence actuelle $\alpha$ et de l'attitude actuelle $\theta$ de l'avion 2.

Conformément à la présente invention, on détermine donc des variations de vent instantanées par mesure de ladite différence $\dot{\alpha}-\dot{\theta}$. Pour pouvoir détecter aussi bien les variations positives (ascendantes) que les variations négatives (descendantes) de vent instantanées, on mesure en réalité la valeur absolue $|\dot{\alpha}-\dot{\theta}|$ de ladite différence et on la compare à un seuil de détection de rafale Ss. Un tel seuil Ss est exprimé en degré d'angle par seconde et peut être par exemple égal au moins approximativement à 1°/s.

Ainsi, si $|\dot{\alpha}-\dot{\theta}|$ est supérieur à Ss, on considère que l'avion 2 est soumis à une rafale de vent vertical.

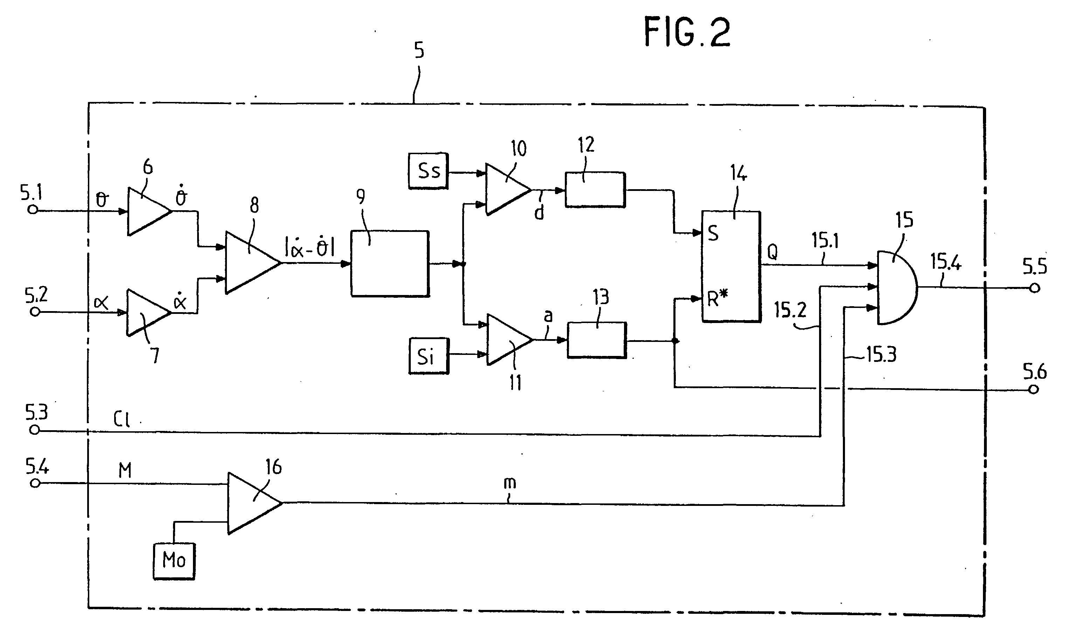

Sur la figure 2, on a représenté le schéma synoptique d'un détecteur 5 de rafales de vent vertical conforme à la présente invention. Ce détecteur 5 est monté à bord de l'avion 2 et il comporte quatre entrées 5.1 à 5.4 et deux sorties 5.5 et 5.6.

Sur les entrées 5.1 et 5.2 sont respectivement appliquées l'attitude actuelle $\theta$ et l'incidence actuelle $\alpha$ de l'aéronef 2. Grâce à des différentiateurs 6 et 7, on obtient respectivement les dérivées premières par rapport au temps $\dot{\theta}$ et $\dot{\alpha}$ de l'attitude actuelle $\theta$ et de l'incidence actuelle $\alpha$. Un soustracteur 8, auxquelles lesdites dérivées sont appliquées, permet d'en faire la différence et délivre à sa sortie la valeur absolue de celle-ci, soit $|\dot{\alpha}-\dot{\theta}|$. Afin d'éliminer les bruits de mesure et d'éviter de fausses détections de rafales de vent vertical, cette valeur absolue est transmise à un filtre 9.

A la sortie du filtre 9, la valeur absolue $|\dot{\alpha}-\dot{\theta}|$ filtrée est adressée à deux comparateurs 10 et 11. Dans le comparateur 10, ladite valeur absolue filtrée est comparée au seuil supérieur Ss, par exemple égal à 1°/s, tandis que, dans le comparateur 11, elle est comparée à un seuil inférieur Si, par exemple égal à 0,5°/s.

Si, et uniquement si, ladite valeur absolue filtrée est :

- supérieure au seuil supérieur Ss, le comparateur 10 émet à sa sortie un signal <u>d</u> de détection de rafales de vent vertical ;
- inférieure au seuil inférieur Si, le comparateur 11 émet à sa sortie un signal <u>a</u> d'absence de rafales de vent vertical.

Des moyens de comptage 12 et 13 mesurent la durée des signaux <u>d</u> et <u>a</u> et les adressent à une bascule 14, de type SR∗ , s'ils durent suffisamment longtemps. Par exemple, le signal d est transmis à l'entrée S de la bascule 14, si sa durée est au moins égale à 200 ms, tandis que le signal a est transmis à l'entrée R* de la bascule 14, si sa durée est au moins égale à ls. La sortie Q de la bascule 14 est reliée à l'une des entrées 15.1 d'une porte 15, du type ET à trois entrées, dont la sortie 15.4 forme la sortie 5.5 du détecteur 5. L'autre sortie 5.6 dudit détecteur est reliée à l'entrée R∗ de ladite bascule 14.

Sur l'entrée 5.3 du détecteur 5 est appliqué un signal cl, représentatif du fait que l'avion 2 est en configuration lisse, c'est-à-dire qu'aucun de ses volets ou becs n'est sorti. L'entrée 5.3 est reliée à l'entrée 15.2 de la porte 15.

Par ailleurs, l'entrée 5.4 du détecteur 5 reçoit le nombre de Mach actuel M de l'avion 2. Ce nombre de Mach actuel M est comparé, dans un comparateur 16, à un seuil de nombre de Mach Mo, par exemple égal à 0,53. La sortie du comparateur 16 est reliée à l'entrée 15.3 de la porte ET et n'adresse un signal m à celle-ci que si le nombre de Mach actuel M est supérieur au seuil Mo.

Le fonctionnement de l'exemple de réalisation du détecteur 5, conforme à l'invention et montré par la figure 2, est le suivant :

A - Vol de croisière sans rafales de vent vertical

L'avion 2 étant en vol de croisière, sa configuration est lisse et son nombre de Mach est supérieur à Mo. Par suite, les entrées 15.2 et 15.3 de la porte ET sont alimentées.

Par ailleurs, puisqu'il n'existe pas de rafales de vent vertical, la valeur absolue $|\dot{\alpha}\text{-}\dot{\theta}|$, filtrée par le filtre 9, est inférieure au seuil Si, de sorte que le signal d n'existe pas et que le signal a, confirmé en durée par les moyens de comptage 13, est appliqué à l'entrée R* de la bascule 14 et à la sortie 5.6 du détecteur 5. Aucun signal n'apparaît donc à la sortie Q de la bascule 14.

Ainsi, dans ce cas, l'entrée 15.1 de la porte ET 15 n'est pas alimentée et aucun signal n'apparaît à la sortie 5.5 du détecteur 5.

B - Vol de croisière avec apparition d'une rafale de vent vertical

Si maintenant, une rafale de vent vertical apparaît, la valeur absolue filtrée $|\dot{\alpha}\text{-}\dot{\theta}|$ devient supérieure au seuil Ss, de sorte que le signal d, confirmé en durée par les moyens de comptage 12, est appliquée à l'entrée S de la bascule 14 et que le signal a disparaît. La sortie Q émet donc un signal de sortie qui est transmis à l'entrée 15.1 de la porte 15. Les deux autres entrées 15.2 et 15.3 étant alimentées comme décrit ci-dessus, la porte ET est passante et un signal de présence de rafale de vent vertical apparaît sur la sortie 5.5 du détecteur 5.

C - Vol de croisière avec disparition d'une rafale de vent vertical

Si la rafale de vent vertical disparaît :

- dans un premier temps, la valeur absolue filtrée $|\dot{\alpha}\text{-}\dot{\theta}|$ devient inférieure au seuil Ss, mais reste supérieure au seuil Si, de sorte que les signaux d et a sont tous les deux nuls. Il en résulte que la sortie Q reste inchangée et continue à émettre son signal de sortie et que, en conséquence, le signal de présence de rafale de vent vertical continue à être présent sur la sortie 5.5 du détecteur 5 ;
- dans un deuxième temps, la valeur absolue filtrée $|\dot{\alpha}\text{-}\dot{\theta}|$ devient inférieure au seuil Si, de sorte que le signal a apparaît et est appliqué à l'entrée R*. La porte 15 n'émet donc aucun signal à sa sortie Q et l'avion 2 reprend l'état qu'il avait antérieurement à l'apparition de la rafale de vent vertical.

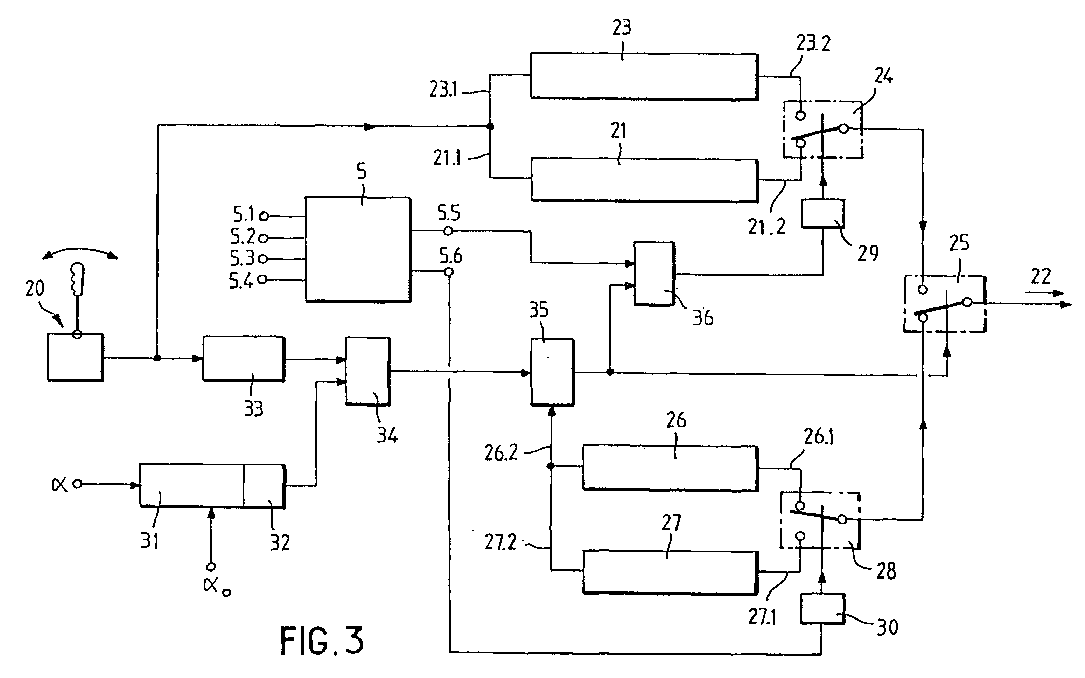

Sur la figure 3, on a représenté un dispositif selon l'invention pour le pilotage en profondeur de l'aéronef 2. Ce dispositif de pilotage comporte :

- un système de manche 20, à la disposition du pilote, pour engendrer des ordres de pilotage en profondeur, notamment des ordres à piquer ;
- un système de commande de vol principal 21 recevant, à son entrée 21.1, lesdits ordres de pilotage en profondeur venant dudit système 20 et engendrant, à sa sortie 21.2, des ordres de commande en profondeur pour des surfaces aérodynamiques 22 (non représentées en détail) de commande en profondeur ;
- un système de commande de vol auxiliaire 23 recevant, à son entrée 23.1 (tout comme le système de commande de vol principal 21), lesdits ordres de pilotage en profondeur venant dudit système de manche 20 et engendrant, à sa sortie 23.2, des ordres de pilotage en profondeur limités au moins en ce qui concerne les ordres à piquer ;
- un commutateur commandé 24, disposé entre les systèmes de commande de vol 21 et 23, d'une part, et lesdites surfaces aérodynamiques 22, d'autre part, ledit commutateur 24 pouvant relier, à celles-ci par l'intermédiaire de moyens de commutation 25, soit la sortie 21.2, soit la sortie 23.2 ;
- un pilote automatique principal 26, susceptible d'émettre sur sa sortie 26.1 des ordres de commande en profondeur pour les surfaces aérodynamiques 22 et sur sa sortie 26.2 un signal représentatif de son état d'activité ;
- un pilote automatique auxiliaire 27, susceptible d'émettre sur sa sortie 27.1 des ordres de commande en profondeur à autorité supérieure (par exemple double) à celle dudit pilote automatique principal 26, et sur sa sortie 27.2, reliée à ladite sortie 26.2 de ce dernier, un signal représentatif de son état d'activité ;

- un commutateur commandé 28, disposé entre les pilotes automatiques 26 et 27, d'une part, et les surfaces aérodynamiques 22, d'autre part, ledit commutateur 28 pouvant relier à celles-ci, par l'intermédiaire desdits moyens de commutation 25, soit la sortie 26.1, soit la sortie 27.1 ;
- le dispositif de détection 5, contrôlant ledit commutateur 24 par sa sortie 5.5 à travers un compteur 29 et contrôlant ledit commutateur 28 par sa sortie 5.6 à travers un compteur 30 ;
- un dispositif de protection en incidence 31, recevant l'incidence actuelle $\alpha$ et la comparant à un seuil de protection $\alpha o$, pour engendrer un signal de protection lorsque ledit seuil est dépassé ;
- un dispositif à retard 32, par exemple du type filtre, disposé à la sortie du dispositif de protection 31 pour retarder ledit signal de protection ;
- un détecteur 33 d'actionnement du système de manche 20, relié à ce dernier et émettant un signal lorsque le pilote actionne ledit système de manche 20 ;
- un circuit logique 34, du type porte OU, recevant les deux signaux provenant du dispositif à retard 32 et du détecteur 33 ;
- un circuit logique 35, du type porte ET, recevant le signal de sortie du circuit logique 34 et le signal d'activité apparaissant sur les sorties communes 26.2 et 27.2 du pilote automatique principal 26 et du pilote automatique auxiliaire 27 ; et
- un circuit logique 36, du type porte ET, recevant le signal apparaissant à la sortie 5.5 du détecteur 5 et le signal apparaissant à la sortie du circuit logique 35.

Par ailleurs, la sortie du circuit logique 35 commande les moyens de commutation 25, tandis que la sortie du circuit logique 36 commande le commutateur commandé 24, à travers le compteur 29.

En vol de croisière, lorsque le pilote automatique 26 est en service, les moyens de commutation 25 et les commutateurs 24 et 28 sont dans les positions illustrées sur la figure 3.

Lorsqu'une rafale de vent vertical survient, elle est détectée par le détecteur 5 et par le dispositif 31 de protection en incidence. Plusieurs processus peuvent alors se produire :

A/ Si la durée de ladite rafale est inférieure au retard imposé par le dispositif 32 et si le pilote n'actionne pas le système de manche 20, ladite rafale a disparu lorsque le dispositif 32 devient passant, de sorte qu'aucun signal n'est adressé à la porte OU 34. La porte ET 35 ne reçoit que le signal de la sortie 26, de sorte que les moyens de commutation 25 et le commutateur 24 ne commutent pas et gardent leurs positions précédentes. Les surfaces aérodynamiques 22 restent alors commandées par le pilote automatique principal 26, à travers le commutateur 28 et les moyens de commutation 25. A la disparition de la rafale, le signal émis sur la sortie 5.6 du détecteur 5 fait basculer le commutateur 28, de sorte qu'à partir de ce moment, lesdites surfaces aérodynamiques 22 sont commandées par le pilote automatique auxiliaire 27 à autorité renforcée. A la fin d'un temps fixé par le compteur 30 (par exemple 20 secondes), le commutateur 28 rebascule et le pilotage est de nouveau assuré par le pilote automatique principal 26.

B/ Si la durée de la rafale est supérieure au retard imposé par le dispositif 32 ou si le pilote actionne le système de manche 20, les deux entrées de la porte ET 35 sont alimentées, de même que les deux entrées de la porte ET 36. Par suite, le commutateur 24 et les moyens de commutation 25 basculent de sorte que, maintenant, c'est le système auxiliaire 23 à autorité limitée qui, sous la commande du système de manche 20, actionne les surfaces aérodynamiques à piquer 22.

Si la rafale de vent vertical disparaît, le dispositif de détection 5 fait rebasculer le commutateur 24, de sorte que les surfaces aérodynamiques 22 sont alors actionnées par le système principal 21.

Grâce au compteur 29, le processus ci-dessus peut être par exemple le suivant : lorsqu'une rafale est détectée depuis moins de six secondes, le système auxiliaire 23 est rendu actif pendant au moins 10 secondes. Si la rafale disparaît, le système principal 21 est rendu de nouveau actif, si la rafale a disparu depuis plus de 4 secondes et si le manche 20 n'est pas activé à piquer depuis plus d'une seconde, afin d'éviter toute discontinuité dans l'autorité au manche susceptible de favoriser le pompage piloté (aircraft pilot coupling).

Bien entendu, le processus ci-dessus n'est qu'un exemple parmi d'autres. De façon générale, la limitation des ordres de pilotage en profondeur engendrés par le système de commande de vol auxiliaire 23 doit être un compromis entre :

- réduire au maximum l'autorité à piquer pour réduire au maximum le risque de facteurs de charge excessifs ; et
- laisser au pilote une autorité à piquer suffisante pour lui permettre d'éviter un autre avion en atmosphère turbulente.

Bien que le système de vol auxiliaire 23 et le pilote automatique auxiliaire 27 aient été représentés ci-dessus comme étant indépendants respectivement du système de vol principal 21 et du pilote automatique principal 26, il va de soi qu'ils pourraient en faire respectivement partie.

## Revendications

1. Dispositif pour le pilotage en profondeur d'un aéronef, comportant un système de manche (20) a la disposition du pilote, un système de commande de vol en profondeur (21) recevant les ordres de pilotage en profondeur venant dudit système de manche (20) et engendrant des ordres de commande en profondeur pour les surfaces aérodynamiques (22) de commande en profondeur, un pilote automatique (26), des moyens de commutation (25) adressant auxdites surfaces aérodynamiques (22) soit les ordres de commande en profondeur élaborés par ledit système de commande de vol (21), soit des ordres de commande en profondeur élaborés par ledit pilote automatique (26), des moyens de protection (31) susceptibles d'agir sur lesdits moyens de commutation (25) pour déconnecter ledit pilote automatique (26) et mettre en service ledit système de commande de vol piloté (21) en réponse à un signal représentatif de la présence de rafales de vent vertical délivré par un dispositif (5) pour la détection de rafales de vent vertical, et des moyens (32) retardant, en vol de croisière avec pilote automatique en service, la commutation entre ledit pilote automatique (26) et ledit système de commande de vol piloté d'un temps de retard, **caractérisé en ce que** lesdits moyens (32) retardent la commutation entre le pilote automatique (26) et le système de commande de vol piloté d'un temps de retard qui est au moins approximativement égal à la durée usuelle des rafales de vent vertical les plus fréquentes et ne procèdent à cette commutation que si la rafale persiste à l'expiration dudit temps de retard, et **en ce que** le dispositif (5) pour la détection de rafales de vent vertical comprend :

   - des moyens de soustraction (8) recevant la dérivée première ($\dot\alpha$) par rapport au temps de l'incidence actuelle ($\alpha$) et la dérivée première ($\dot\theta$) par rapport au temps de l'attitude actuelle ($\theta$) de l'aéronef et délivrant à leur sortie la valeur absolue ($|\dot\alpha - \dot\theta|$) de la différence entre lesdites dérivées ;
   - des premiers moyens de comparaison (10) pour comparer ladite valeur absolue à un seuil supérieur (Ss) et pour délivrer un signal (d) si ladite valeur absolue est supérieure audit seuil supérieur (Ss) ;
   - des deuxièmes moyens de comparaison (16) pour comparer le nombre de Mach actuel de l'aéronef (M) à un seuil de nombre de Mach (Mo) et pour délivrer un signal (m) si ledit nombre de Mach actuel est supérieur audit seuil de nombre de Mach ; et
   - des premiers moyens logiques (15) de type ET recevant, respectivement, à leurs entrées :

       · ledit signal (d) résultant de la comparaison de ladite valeur absolue audit seuil supérieur ;
       · ledit signal (m) résultant de la comparaison dudit nombre de Mach actuel audit seuil de nombre de Mach (Mo) ; et
       · un signal (cl) représentatif du fait que les volets et les becs aérodynamiques dudit aéronef sont en configuration lisse,

   lesdits premiers moyens logiques (15) délivrant à leur sortie (15.4) un signal représentatif de la présence de rafales de vent vertical.

2. Dispositif de pilotage selon la revendication 1, **caractérisé en ce que** ledit dispositif de détection (5) comporte des moyens de dérivation (6, 7) recevant des signaux représentatifs de l'attitude actuelle ($\theta$) et de l'incidence actuelle ($\alpha$) et délivrant à leur sortie lesdites dérivées premières ($\dot\alpha$ et $\dot\theta$).

3. Dispositif de pilotage selon l'une des revendications 1 ou 2,
   **caractérisé en ce que** ledit dispositif de détection (5) comporte :

   - des troisièmes moyens de comparaison (11) pour comparer ladite valeur absolue à un seuil (Si) inférieur audit seuil supérieur (Ss) et pour délivrer un signal si ladite valeur absolue est inférieure audit seuil inférieur (Si) ; et
   - des seconds moyens logiques (14) interposés entre lesdits premiers moyens de comparaison (10) et lesdits premiers moyens logiques (15), lesdits seconds moyens logiques (14) recevant à leurs entrées lesdits signaux (d) et (a) résultant des comparaisons de ladite valeur absolue avec lesdits seuils et délivrant auxdits premiers moyens logiques (15):

       · soit aucun signal, si ledit signal (a) résultant de la comparaison de ladite valeur absolue audit seuil inférieur existe ;
       · soit ledit signal (d) résultant de la comparaison de ladite valeur absolue audit seuil supérieur, tant que ladite valeur absolue ($|\dot\alpha-\dot\theta|$) est supérieure audit seuil inférieur (Si).

4. Dispositif de pilotage selon l'une des revendications 1 à 3,
   **caractérisé en ce qu'**il comporte de plus :

   - un pilote automatique auxiliaire (27) engendrant des ordres de pilotage en profondeur renforcés, au moins en ce qui concerne les ordres à monter ;
   - un premier commutateur commandé (28) disposé entre lesdits pilotes automatiques (26 et 27), d'une part, et lesdits moyens de commutation (25), d'autre part, et pouvant adresser à ceux-ci, soit les ordres de commande en profondeur provenant dudit pilote automatique (26), soit les ordres de commande en profondeur provenant dudit pilote automatique auxiliaire (27),

et **en ce que** ledit dispositif (5) de détection de rafales de vent vertical contrôle ledit premier commutateur commandé (28) pour que lesdits ordres de pilotage en profondeur renforcés soient adressés auxdites surfaces aérodynamiques, à la fin desdites rafales, si ledit pilote automatique n'a pas été déconnecté avec retard par lesdits moyens de commutation (25).

5. Dispositif de pilotage selon l'une des revendications 1 à 4,
   **caractérisé en ce qu'**il comporte de plus :

   - un système de commande de vol auxiliaire piloté (23) recevant lesdits ordres de pilotage en profondeur venant dudit système de manche (20) et engendrant des ordres de pilotage en profondeur limités au moins en ce qui concerne les ordres à piquer ;
   - un second commutateur commandé (24) disposé entre lesdits systèmes de commande de vol pilotés (21, 23), d'une part, et lesdits moyens de commutation (25), d'autre part, et pouvant adresser à ceux-ci soit les ordres de commande en profondeur provenant dudit système de commande de vol (21), soit les ordres de commande en profondeur limités provenant dudit système de commande de vol auxiliaire (23),

   et **en ce que** ledit dispositif (5) de détection de rafales de vent vertical contrôle ledit second commutateur commandé (24) pour que lesdits ordres de pilotage en profondeur limités soient adressés auxdites surfaces aérodynamiques (22) pendant de telles rafales de vent vertical, après déconnexion dudit pilote automatique (26).

## Patentansprüche

1. Vorrichtung zum Steuern der Höhe eines Flugzeugs, die ein Steuerknüppelsystem (20) für den Piloten, ein Flughöhensteuerungssystem (21), das die Höhensteuerungsbefehle, die vom genannten Steuerknüppelsystem (20) kommen, erhält und die Höhensteuerungsbefehle für die aerodynamischen Höhensteuerungsflächen (22) erzeugt, einen Autopiloten (26), Umschaltmittel (25), die den genannten aerodynamischen Flächen (22) entweder von dem genannten Flugsteuerungssystem (21) erstellte Höhensteuerungsbefehle oder vom genannten Autopiloten (26) erstellte Höhensteuerungsbefehle erteilen, Schutzmittel (31), die auf die genannten Umschaltmittel (25) wirken können, um den genannten Autopiloten (26) abzuschalten und das genannte Steuerungssystem für den durch den Piloten gesteuerten Flug (21) als Reaktion auf ein Signal, das repräsentativ für das Vorhandensein vertikaler Windstöße ist und von einer Vorrichtung (5) zur Ortung vertikaler Windstöße geliefert wird, einzuschalten, und Mittel (32), die im Marschflug mit eingeschaltetem Autopiloten die Umschaltung zwischen dem genannten Autopiloten (26) und dem genannten Steuerungssystem für den durch den Piloten gesteuerten Flug um eine Verzögerungszeit verzögern,
   **dadurch gekennzeichnet, dass** die genannten Mittel (32) die. Umschaltung zwischen dem Autopiloten (26) und dem Steuerungssystem für den durch den Piloten gesteuerten Flug um eine Verzögerungszeit verzögern, die mindestens annähernd gleich der üblichen Dauer der häufigsten vertikalen Windböen ist und diese Umschaltung nur durchführen, wenn der Windstoß nach Ablauf der genannten Verzögerungszeit anhält, sowie dadurch, dass die Vorrichtung (5) zur Ortung von vertikalen Windstößen folgendes umfasst:

   - Subtraktionsmittel (8), in die die erste Ableitung ($\dot{\alpha}$) in Bezug auf die Zeit des aktuellen Anstellwinkels ($\alpha$) und die erste Ableitung ($\dot{\theta}$) in Bezug auf die Zeit der aktuellen Fluglage ($\theta$) des Flugzeugs eingegeben wird und die an ihrem Ausgang den Absolutwert ($|\dot{\alpha}\text{-}\dot{\theta}|$) der Differenz zwischen den genannten Ableitungen liefern;
   - erste Vergleichsmittel (10), um den genannten Absolutwert mit einem oberen Schwellenwert (Ss) zu vergleichen und ein Signal (d) zu liefern, wenn der genannte Absolutwert größer ist als der genannte obere Schwellenwert (Ss);
   - zweite Vergleichsmittel (16), um die aktuelle Machzahl des Flugzeugs (M) mit einem Machzahl-Schwellenwert (Mo) zu vergleichen und ein Signal (m) zu liefern, wenn die genannte aktuelle Machzahl größer ist als der genannte Machzahl-Schwellenwert; und
   - erste Logikmittel (15) des Typs UND, die an ihren Eingängen jeweils folgendes erhalten:

     - das genannte, sich aus dem Vergleich des genannten Absolutwerts mit dem oberen Schwellenwert ergebende Signal (d);
     - das genannte, sich aus dem Vergleich der genannten aktuellen Machzahl mit dem genannten Machzahl-Schwellenwert (Mo) ergebende Signal (m); und

- ein Signal (cl), das repräsentativ ist, da die aerodynamischen Klappen und Schnäbel des genannten Flugzeugs eine glatte Konfiguration besitzen,

wobei die genannten ersten Logikmittel (15) an ihrem Ausgang (15.4) ein Signal liefern, das repräsentativ für das Vorhandensein vertikaler Windstöße ist.

2. Steuerungsvorrichtung nach Anspruch 1, **dadurch gekennzeichnet, dass** die genannte Ortungsvorrichtung (5) Ableitungsmittel (6, 7) umfasst, die Signale erhalten, die repräsentativ für die aktuelle Fluglage ($\theta$) und den aktuellen Anstellwinkel ($\alpha$) sind, und an ihrem Ausgang die genannten ersten Ableitungen ($\dot{\alpha}$ und $\dot{\theta}$) liefern.

3. Steuerungsvorrichtung nach einem der Ansprüche 1 oder 2, **dadurch gekennzeichnet, dass** die genannte Ortungsvorrichtung (5) folgendes umfasst:

- dritte Vergleichsmittel (11), um den genannten Absolutwert mit einem Schwellenwert (Si) zu vergleichen, der kleiner ist als der genannte obere Schwellenwert (Ss), und um ein Signal zu liefern, wenn der genannte Absolutwert kleiner ist als der genannte untere Schwellenwert (Si); und
- zweite, zwischen den genannten ersten Vergleichsmitteln (10) und den genannten ersten Logikmitteln (15) eingefügte Logikmittel (14), wobei die genannten zweiten Logikmittel (14) an ihren Eingängen die genannten Signale (d) und (a) erhalten, die sich aus den Vergleichen des genannten Absolutwerts mit den genannten Schwellenwerten ergeben und die den genannten ersten Logikmitteln (15):

  - entweder kein Signal liefern, wenn das sich aus dem Vergleich des genannten Absolutwertes mit dem genannten unteren Schwellenwert ergebende Signal (a) existiert;
  - oder das sich aus dem Vergleich des genannten Absolutwertes mit dem genannten oberen Schwellenwert ergebende Signal (d) liefern, insofern als der genannte Absolutwert ($|\dot{\alpha}-\dot{\theta}|$) größer ist als der genannte untere Schwellenwert (Si).

4. Steuerungsvorrichtung nach einem der Ansprüche 1 bis 3, **dadurch gekennzeichnet, dass** sie weiterhin folgendes umfasst:

- einen Hilfs-Autopiloten (27), der verstärkte Höhensteuerungsbefehle zumindest bezüglich der Steigbefehle erzeugt;
- einen ersten gesteuerten Umschalter (28), der zwischen den genannten Autopiloten (26 und 27) zum einen und den genannten Umschaltmitteln (25) zum anderen angeordnet ist, und ihnen entweder die vom genannten Autopiloten (26) kommenden Höhensteuerungsbefehle oder die vom genannten Hilfs-Autopiloten (27) kommenden Höhensteuerungsbefehle senden kann,

und dadurch, dass die genannte Vorrichtung (5) zur Ortung von vertikalen Windstößen den genannten ersten gesteuerten Umschalter (28) ansteuert, damit die genannten verstärkten Regelungsbefehle am Ende der genannten Windstöße an die genannten aerodynamischen Flächen gesandt werden, wenn der genannte Autopilot von den genannten Umschaltmitteln (25) nicht mit Verzögerung abgeschaltet worden ist.

5. Steuerungsvorrichtung nach einem der Ansprüche 1 bis 4, **dadurch gekennzeichnet, dass** sie weiterhin folgendes umfasst:

- ein Hilfssteuerungssystem für den durch den Piloten gesteuerten Flug (23), das die genannten Höhensteuerungsbefehle, die vom genannten Steuerknüppelsystem (20) kommen, erhält und Höhensteuerungsbefehle erzeugt, die, zumindest was die Sturzflugbefehle angeht, begrenzt sind;
- einen zweiten gesteuerten Umschalter (24), der zwischen den genannten Steuerungssystemen für den durch den Piloten gesteuerten Flug (21, 23) zum einen und den genannten Umschaltmitteln (25) zum anderen angeordnet ist und an diese entweder die vom genannten Flugsteuerungssystem (21) kommenden Höhensteuerungsbefehle oder die vom genannten Hilfs-Flugsteuerungssystem (23) kommenden begrenzten Höhensteuerungsbefehle senden kann,

sowie dadurch, dass die genannte Vorrichtung (5) zur Ortung von vertikalen Windstößen den genannten zweiten gesteuerten Umschalter (24) ansteuert, damit die genannten begrenzten Höhensteuerungsbefehle während solcher Windstöße nach Abschalten der genannten Autopiloten (26) an die genannten aerodynamischen Flächen (22) geleitet werden können.

## Claims

1. Device for the pitch-attitude control of an aircraft comprising a stick system (20) available to the pilot, a pitch-attitude flight control system (21) receiving pitch-attitude control commands from said stick system (20) and generating pitch-attitude control commands for the aerodynamic pitch-attitude control surfaces (22), an automatic pilot (26), switching means (25) sending to said aerodynamic surfaces (22) either the pitch-attitude control commands formulated by said flight control system (21), or pitch-attitude control commands formulated by said automatic pilot (26), protection means (31) capable of acting on said switching means (25) to disconnect said automatic pilot (26) and switch on said controlled flight control system (21) in response to a signal representative of the presence of vertical gusts of wind delivered by a device (5) for detecting vertical gusts of wind, and means (32) which, in cruising flight with the automatic pilot in operation, delay the switching between said automatic pilot (26) and said controlled flight control system by a delay time, **characterized in that** said means (32) delay the switching between the automatic pilot (26) and the controlled flight control system by a delay time which is at least approximately equal to the usual duration of the most frequent vertical gusts of wind and do not carry out this switching unless the gust persists when said delay time has elapsed, and **in that** the device (5) for detecting vertical gusts of wind comprises:

   - subtracting means (8) receiving the first differential ($\dot{\alpha}$) with respect to time of the current incidence ($\alpha$) and the first differential ($\dot{\theta}$) with respect to time of the current pitch attitude ($\theta$) of the aircraft and delivering on their output the absolute value ($|\dot{\alpha}-\dot{\theta}|$) of the difference between said differentials;
   - first comparison means (10) for comparing said absolute value to an upper threshold (Ss) and for delivering a signal (d) if said absolute value is above said upper threshold (Ss);
   - second comparison means (16) for comparing the current Mach number (M) of the aircraft to a Mach number threshold (Mo) and for delivering a signal (m) if said current Mach number is above said Mach number threshold; and
   - first logic means (15) of the AND type receiving, respectively, on their inputs:

      said signal (d) resulting from the comparison of said absolute value with said upper threshold;
      said signal (m) resulting from the comparison of said current Mach number with said Mach number threshold (Mo); and

   a signal (cl) which represents the fact that the aerodynamic flaps and slats of said aircraft are in the clean configuration,

   said first logic means (15) delivering on their output (15.4) a signal which represents the presence of vertical gusts of wind.

2. Control device according to Claim 1, **characterized in that** said detection device (5) comprises differentiation means (6, 7) receiving signals that represent the current pitch attitude ($\theta$) and the current incidence ($\alpha$) and delivering on their output said first differentials ($\dot{\alpha}$ and $\dot{\theta}$).

3. Control device according to either of Claims 1 and 2, **characterized in that** said detection device (5) comprises:

   - third comparison means (11) for comparing said absolute value with a threshold (Si) lower than said upper threshold (Ss) and for delivering a signal if said absolute value is below said lower threshold (Si); and
   - second logic means (14) inserted between said first comparison means (10) and said first logic means (15), said second logic means (14) receiving on their inputs said signals (d) and (a) resulting from the comparisons of said absolute value with said thresholds and delivering to said first logic means (15):

      . either no signal, if said signal (a) resulting from the comparison of said absolute value with said lower value exists;
      . or said signal (d) resulting from the comparison of said absolute value with said upper threshold, as long as said absolute value ($|\dot{\alpha}-\dot{\theta}|$) is above said lower threshold (Si).

4. Control device according to one of Claims 1 to 3, **characterized in that** it additionally comprises:

   - an auxiliary automatic pilot (27) generating strengthened pitch-attitude control commands, at least as regards commands to climb;
   - a first controlled switch (28) placed between said automatic pilots (26 and 27) on the one hand, and said switching means (25) on the other hand, and capable of sending to these either the pitch-attitude control commands from said automatic pilot (26), or the pitch-attitude control commands from said auxiliary automatic pilot (27),

   and **in that** said device (5) for detecting vertical gusts of wind controls said first controlled switch (28) so that said strengthened pitch-attitude control commands are sent to said aerodynamic surfaces at the end of said gusts if said automatic pilot has not been disconnected with a delay by said switching means (25).

5. Control device according to one of Claims 1 to 4, **characterized in that** it additionally comprises:

   - a controlled auxiliary flight control system (23) receiving said pitch-attitude control commands from said stick system (20) and generating pitch-attitude control commands which are limited at least as regards commands to nose down;
   - a second controlled switch (24) placed between said controlled flight control systems (21, 23) on the one hand, and said switching means (25) on the other hand, and able to send to these either the pitch-attitude control commands from said flight control system (21), or the limited pitch-attitude control commands from said auxiliary flight control system (23),

   and **in that** said device (5) for detecting vertical gusts of wind controls said second controlled switch (24) so that said limited pitch-attitude control commands are sent to said aerodynamic surfaces (22) during such vertical gusts of wind once said automatic pilot (26) has been disconnected.

FIG.1

FIG.2

FIG.3

EP 0 845 727 B1